# EUROPÄISCHE PATENTSCHRIFT

(11) **EP 0 985 514 B1**
(45) Veröffentlichungstag und Bekanntmachung des Hinweises auf die Patenterteilung: **15.05.2002**
(21) Anmeldenummer: 99116642.2
(22) Anmeldetag: 26.08.1999
(51) Int. Cl.: B29C 51/26, B29C 51/30, B29C 33/30

(54) **Verriegelungseinrichtung zum Verriegeln bzw. Befestigen von unterschiedlich grossen Formwerkzeugen auf der Warmvormmaschine**
Locking means for locking easily different mould sizes on the thermoforming machine
Dispositif de verrouillage pour verrouiller des moules de dimensions différentes pour une machine de thermoformage

(30) Priorität: 08.09.1998 DE 19840940
(43) Veröffentlichungstag der Anmeldung: 15.03.2000
(73) Patentinhaber: Adolf Illig Maschinenbau GmbH & Co, D-74081 Heilbronn (DE)
(72) Erfinder: Schwarzmann, Peter, 74081 Heilbronn (DE); Scheithauer, Michael, 74821 Mosbach (DE)

(56) Entgegenhaltungen:
- EP-A- 0 879 692
- DE-A- 4 212 814
- DE-U- 9 100 937
- US-A- 5 096 405

## Beschreibung

Die Erfindung betrifft eine Formstation mit den Merkmalen des Patentanspruches 1. In einer solchen Formstation sind zwei Spannrahmen zum Einspannen einer Platte angeordnet, femer ein höhenbeweglicher Tisch zur Aufnahme einer Tiefziehform entsprechend der Form der herzustellenden Teile sowie Distanzen zwischen Tisch und Tiefziehform zum Überbrücken des durch den unteren Spannrahmen bedingten Abstandes.

Aus der DE 33 13 020 C 1 ist es bekannt, diese Distanz durch einen Distanzrahmen aus Profilstäben zu überbrücken. Das bedeutet, dass zu jeder Tiefziehform ein entsprechender Distanzrahmen angefertigt werden muss und diese dadurch verteuert. Die Fertigungszeit der Tiefziehformen wird länger, die Tiefziehformen werden schwerer. Die Abstützung der Formengrundplatte erfolgt immer am Außenrand und es besteht die Gefahr der Durchbiegung während des Vakuumformens, insbesondere bei größeren Tiefziehformen. Die Formengrundplatte muss deshalb entsprechend stark dimensioniert werden. Mittels Befestigungselementen muss die Tiefziehform auf dem Tisch befestigt werden, was aufwendig ist. Dafür sind an vielen Stellen des Tisches entsprechende Gewinde vorzusehen, da die Größe der Tiefziehformen variiert und für alle Größen Befestigungseinrichtungen vorhanden sein müssen.

Aus der DE 42 12 814 A1 ist eine Verriegelungseinrichtung für die beiden Formhälften eines Spritzgusswerkzeuges mit je einer Formträgerplatte bekannt. Jede Formhälfte weist zwei Spannzapfen auf, die in Bohrungen in der Formträgerplatte eingeschoben und mittels eines Keils verriegelt werden. Für die Verriegelungseinrichtung als solche wird kein Patentschutz begehrt, sondern nur in Verbindung mit den anderen Merkmalen des Hauptanspruches.
Distanzleisten zum Überbrücken eines Abstandes zwischen Formträgerplatte und Formhälfte sind dieser Schrift nicht zu entnehmen, da hier eine direkte Verbindung beider Teile erfolgt. Probleme mit der Abstützung gegen Durchbiegung liegen hier nicht vor. Die Lage der Bohrungen in den Formträgerplatten ist festgelegt, sodass nur eine eingeschränkte Größenvarianz an Formhälften aufgenommen werden kann. Bei Tiefziehmaschinen, bei denen eine Platte als Ausgangsmaterial verwendet wird, deren Spannrand als Abfall verbleibt, ist eine enge Anpassung der Tiefziehform und der Spannrahmen an die Abmessungen des Formteils erforderlich, um den Abfall zu minimieren. Auch diese Probleme bestehen bei Spritzgussmaschinen nicht, da dort der Abfall von anderen Faktoren bestimmt wird und die Außenform nebensächlich ist, denn die Innenform ist entscheidend für die Gestalt des hergestellten Teils. Der Fachmann erhält also aus dieser Veröffentlichung keine Anregungen zur Gestaltung einer Formstation einer Vorrichtung zum Tiefziehen einer Folienbahn gemäß Hauptanspruch.

Der Erfindung liegt die Aufgabe zugrunde, die Formstation so zu gestalten, dass die Verbindung zwischen Formengrundplatte, Distanz und Tisch bzw. einer auf dem Tisch angeordneten Trägerplatte verbessert wird im Hinblick auf eine optimale Abstützung der Formengru]ndplatte, Minimierung des Aufwandes für die Distanz und Minimierung der Befestigungseinrichtungen zwischen Formengrundplatte, Distanz und Tisch bzw. Trägerplatte. In Weiterbildung der Erfindung sollte die Befestigung zwischen Formengrundplatte und Distanz sowie zwischen Distanz und Tisch bzw. Trägerplatte gleichzeitig durch eine Betätigung erfolgen.

Die Lösung dieser Aufgabe ist im Patentanspruch 1 angegeben. Vorteilhafte Weiterbildungen sind Merkmale der Unteransprüche.
Der Gegenstand der Erfindung wird nachfolgend anhand der schematischen Zeichnungen beschrieben. Es zeigen:

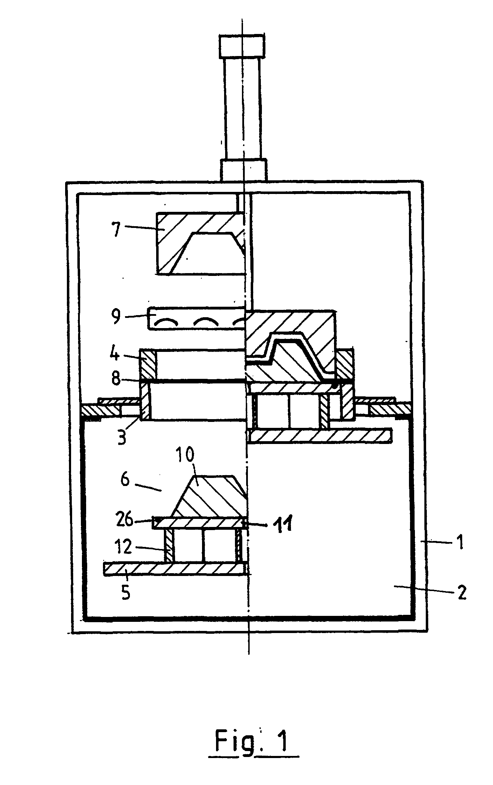

- Figur 1 -: ein Schnitt durch die Formstation
- Figur 2 -: einen vergrößerten Querschnitt durch den Bereich Tiefziehform - Tisch gemäß einer ersten Ausführungsform
- Figuren 3 - 5: Ansichten der Teile gemäß Ausführungsform Fig. 1
- Figuren 6 - 7: einen vergrößerten Querschnitt durch den Bereich Tiefziehform - Tisch gemäß einer Weiterbildung der Erfindung in zwei Stellungen.
- Figur 8: eine Draufsicht auf die Ausführung gemäß den Figuren 6 und 7
- Figur 9: eine Draufsicht auf ein Verriegelungselement in Form einer Lasche
- Figur 10: eine Draufsicht auf die Trägerplatte mit 4 Distanzleisten

Die Formstation besteht im wesentlichen aus einem Rahmen 1, einem Blaskasten 2, einem oberen Spannrahmen 4, einem unteren Spannrahmen 3 und dem höhenbeweglichen Tisch 5, der eine Tiefziehform 6 trägt. Ein Streckhelfer 7 kann vorhanden sein. Zum Beheizen der eingespannten Platte 8 dient eine horizontal verschiebbare Heizung 9, die auch seitlich der Formstation angeordnet sein kann, falls die Formstation eine separate Heizstation und eine entsprechende Transporteinrichtung vorgeschaltet sind. Die Tiefziehform 6 setzt sich aus der eigentlichen Form 10 und einer Formengrundplatte 11 zusammen. Im eingebauten Zustand sitzt diese Formengrundplatte 11 auf vier Distanzleisten 12. Diese Distanzleisten 12 sind in ihrer Lage veränderbar entweder direkt auf dem Tisch 5 oder auf einer Trägerplatte 14 angeordnet. Eine ringsum verlaufende Dichtung 26 kann bei Bedarf vorgesehen sein und dichtet das Vakuum beim Tiefziehen ab.

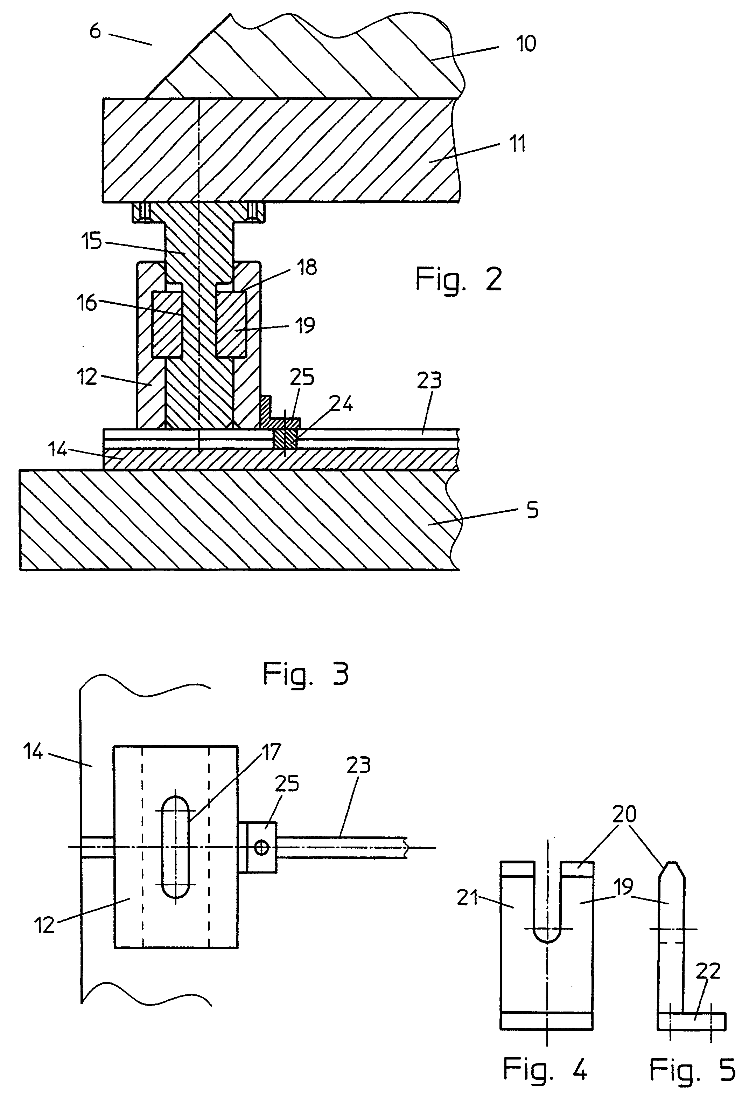

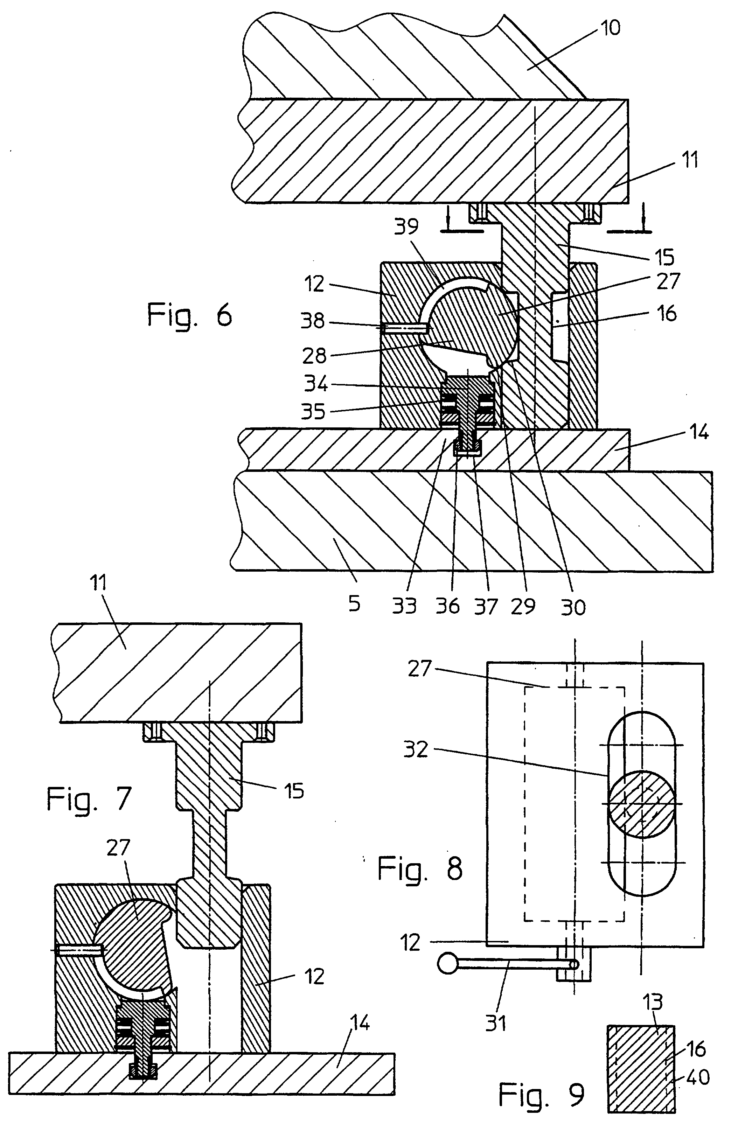

In den Figuren 2 bis 5 ist eine einfache Gestaltung einer als Klemmeinrichtung ausgebildeten Distanzleiste 12 dargestellt. An der Formengrundplatte 11 sind Verriegelungselemente in Form von runden Bolzen 15 oder rechteckigen Laschen 13 (siehe Figur 9) montiert, die eine Nut 16 aufweisen. In den Distanzleisten 12 ist ein dem Durchmesser der Bolzen 15 entsprechendes Loch vorgesehen, das rund oder als Langloch 17 ausgebildet sein kann. Ein Langloch bietet mehr Freiheit bezüglich der Toleranz der Lochabstände beim Einstellen der Distanzleisten 12 zueinander, wenn auf ein anderes Format umgestellt wird und kann eine Verlängerung der Formengrundplatte 11, bedingt durch Wärmeausdehnung, aufnehmen. In einem Schlitz 18 sitzt ein horizontal verschiebbarer Schieber 19, der wie in den Figuren 3 bis 5 dargestellt gestaltet ist. Er weist eine Gabelform auf mit zwei Stegen 21, die in die Nut 16 des Bolzens 15 eingreifen. Durch eine Schräge 20 kann auch eine verworfene Formengrundplatte 11 ergriffen und nach unten plan gezogen werden. Die Horizontalverschiebung des Schiebers 19 erfolgt entweder von Hand, wozu er zum Ergreifen einen Steg 22 aufweist oder durch am Steg 22 angreifende pneumatische, hydraulische oder motorische Antriebe, die nicht näher dargestellt sind.

Die vier Distanzleisten 12 sitzen entweder auf einer Trägerplatte 14 mit Nut 23 und Nutensteinen 24, sodaß über einen Winkel 25 die Befestigung der Distanzleisten 12 mit der Trägerplatte 14 erfolgen kann. Oder die Nuten 23 sitzen direkt im Tisch 5. Die Anordnung auf einer Trägerplatte 14 hat den Vorteil, daß die gesamte Einheit Trägerplatte 14 - Distanzleisten 12 aus der Formstation herausgefahren werden kann zum Wechseln einer Tiefziehform 6, z. B. mittels Gabelstapler.

Die Figuren 6 bis 8 zeigen eine Verriegelungseinrichtung, die verschiedene Verbesserungen bietet. Die Distanzbolzen 15 mit ihrer Nut 16 werden bei dieser Ausführung von einer Klemmwalze 27 ergriffen, die durch eine Ausfräsung 28 eine Nase 29 aufweist, die im Eingriff mit der Fläche 30 der Nut 16 gebracht werden kann. Die Klemmwalze 27 ist in der Distanzleiste 12 drehbar gelagert und auf einer Seite mit einem Hebel 31 verbunden. In der Aufnahme 12 ist ein Langloch 32 vorgesehen, in das der Bolzen 15 eingreift. Die Anordnungsstellung des Hebels 31 ist vorzugsweise so gewählt, daß diese nach oben steht, wenn die Verriegelung offen ist. Die vier nach oben stehenden Hebel 31 bilden so eine Sichthilfe für das richtige Einlegen einer neuen Tiefziehform 6.

In besonderer Ausbildung der Erfindung steht die Klemmwalze 27 mit einer Klemmeinrichtung 33 in Wirkverbindung in der Weise, daß bei entriegeltem Bolzen 15 die Klemmwalze 27 auch die Klemmung zwischen Distanzleiste 12 und Trägerplatte 14 aufhebt (siehe Figur 7). Dies geschieht dadurch, daß der Umfang der Klemmwalze 27 auf einen Bolzen 34 drückt, der mit Federn 35 nach oben gedrückt wird. Der Bolzen 34 sitzt in einem Nutenstein 36, dieser in einer Nut 37 in der Trägerplatte 14. Bei verriegelter Form 10 steht die Klemmwalze 27 wie in Figur 6 dargestellt und die Ausfräsung 28 führt dazu, daß die Federn 35 die Klemmung zwischen Distanzleiste 12 und Trägerplatte 14 bewirken.

Die Drehbewegung der Klemmwalze 27 wird über einen Stift 38 begrenzt, der in der Distanzleiste 12 sitzt und in eine Nut 39 in der Klemmwalze 27 eingreift. Auf diese Weise werden die beiden Grenzstellungen des Hebels 31 definiert.

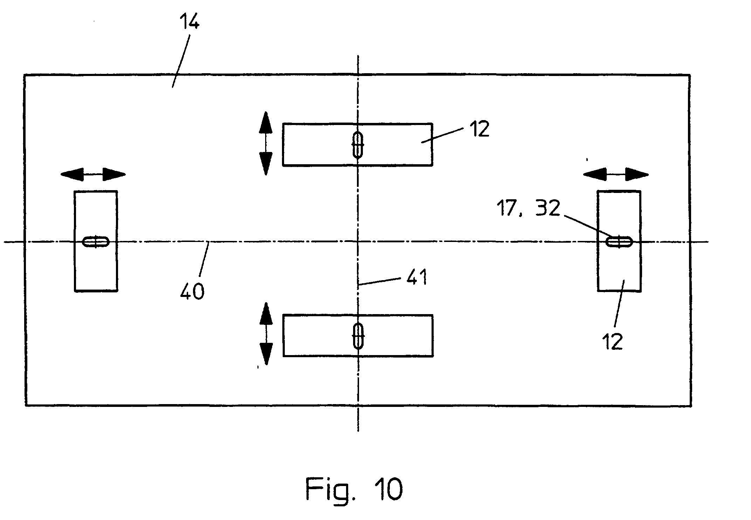

Wenn das Aufnahmeloch für die Verriegelungselemente 15, 13 in den Distanzen 12 als Langloch 17, 32 ausgebildet ist, kann die temperaturbedingte Längenänderung der Formengrundplatte 11 aufgenommen werden, wenn diese Langlöçher 17, 32 in die richtige Richtung verlaufen. Diese Anordnung ist in Figur 10 dargestellt. Jeweils 2 zueinander verstellbare Distanzleisten 12 sitzen auf einer der Symmetrieachsen 40, 41 und die Langlöcher 17, 32 in den beiden zueinander verstellbaren Distanzleisten 12 verlaufen in Richtung ihrer Symmetrieachse 40, 41. Hierdurch ist die Längenänderung in beiden Richtungen möglich.

## Patentansprüche

1. Formstation einer Vorrichtung zum Tiefziehen einer erwärmten Platte aus thermoplastischem Kunststoff mittels Differenzdruck;
a) mit zwei Spannrahmen (3,4) zum Einspannen der Platte (8);
b) einem höhenbeweglichen Tisch (5) zur Aufnahme einer Tiefziehform (6);
c) Distanzleisten (12) zwischen dem Tisch (5) oder einer auf dem Tisch (5) angeordneten Trägerplatte (14) und der Formengrundplatte (11) der Tiefziehform (6);
d) die zur Anpassung an verschiedene Größen von Tiefziehformen (6) verschiebbar auf dem Tisch (5) oder auf der Trägerplatte (14) gestaltet
e) und als Verriegelungseinheit für an der Formengrundplatte (11) befestigte Verriegelungselemente (15, 13) ausgebildet sind.

2. Formstation nach Anspruch 1 **dadurch gekennzeichnet, daß** die Verriegelungselemente als Bolzen (15) oder Lasche (13) ausgebildet sind und eine Nut (16) aufweisen, in die ein Gegenstück (19, 27) durch Verschiebung oder Verdrehung in Eingriff gebracht werden kann.

3. Formstation nach Anspruch 1 oder 2 **dadurch gekennzeichnet, daß** das Gegenstück als Schieber (19) ausgebildet ist, der manuell, pneumatisch, hydraulisch oder motorisch verschiebbar ausgebildet ist.

4. Formstation nach Anspruch 3 **dadurch gekennzeichnet, daß** der Schieber (19) zwei Stege (21) mit Schräge (20) aufweist.

5. Formstation nach Anspruch 1 oder 2 **dadurch gekennzeichnet, daß** das Gegenstück als Klemmwalze (27) ausgebildet ist, die durch eine Ausfräsung (28) eine Nase (29) aufweist, die im Eingriff mit der Fläche (30) der Nut (16) steht.

6. Formstation nach Anspruch 5 **dadurch gekennzeichnet, daß** die Klemmwalze (27) mit einem Hebel (31) verbunden ist.

7. Formstation nach Anspruch 5 **dadurch gekennzeichnet, daß** die Klemmwalze (27) mit einem hydraulischen, pneumatischen oder elektrischen Antrieb verbunden ist.

8. Formstation nach einem der Ansprüche 5 - 7 **dadurch gekennzeichnet, daß** die Klemmwalze (27) eine Nut (39) aufweist, in die ein an der Distanzleiste (12) befestigter Stift (38) eingreift und als Verdrehanschlag dient.

9. Formstation nach einem der Ansprüche 5 bis 8 **dadurch gekennzeichnet, daß** die Klemmwalze (27) mit der Klemmeinrichtung (33) für die Klemmung zwischen Distanzleisten (12) und Trägerplatte (14) bzw. Tisch (5) in Wirkverbindung steht.

10. Formstation nach Anspruch 9 **dadurch gekennzeichnet, daß** die Klemmwalze (27) mit ihrem Umfang in Öffnungsstellung auf einem Bolzen (34) anliegt, der in einem Nutenstein (36) sitzt und über Federn (35) betätigt wird, wobei der Nutenstein (36) in einer Nut (37) in der Trägerplatte (14) bzw. im Tisch (5) sitzt, während in der Klemmstellung die Ausfräsung (28) dem Bolzen (34) gegenübersteht.

11. Formstation nach Anspruch 6 **dadurch gekennzeichnet, daß** der Hebel (31) so an der Klemmwalze (27) befestigt ist, daß er in entriegelter Stelllung der Verriegelungseinheit nach oben steht und als Einlegehilfe dient.

12. Formstation nach einem der Ansprüche 1 bis 11 **dadurch gekennzeichnet, daß** in den Distanzleisten (12) je ein Durchbruch in Form eines Langloches (17, 32) vorgesehen ist, wobei die Langlöcher (17, 32) in Richtung der Symmetrieachse (40, 41) der zueinander verstellbaren Distanzleisten (12) verlaufen.

## Claims

1. Moulding station of a device for deep-drawing a heated plate of thermoplastic synthetic material by means of differential pressure;
a) with two clamping frames (3, 4) for clamping the plate (8) in place;
b) a table (5), which is movable in height for receiving a deep-drawing mould (6);
c) spacer strips (12) between the table (5), or a support plate (14) arranged on the table (5), and the mould base plate (11) of the deep-drawing mould (6);
d) the strips being designed to be displaceable on the table (5) or on the support plate (14) for adaptation to the different sizes of deep-drawing moulds (6)
e) and being constructed as a locking unit for locking elements (15, 13) fastened to the mould base plate (11).

2. Moulding station according to claim 1, **characterised in that** the locking elements are constructed as pins (15) or straps (13) and have a groove (16) in which a counter-member (19, 27) can be brought into engagement by sliding or turning.

3. Moulding station according to claim 1 or 2, **characterised in that** the counter-member is constructed as a slider (19), which is constructed to be displaceable manually, pneumatically, hydraulically or by motor.

4. Moulding station according to claim 3, **characterised in that** the slider (19) has two webs (21) with chamfers (20).

5. Moulding station according to claim 1 or 2, **characterised in that** the counter-member is constructed as a clamping roller (27) which has, through a milling away, a nose (29) standing in engagement with the surface (30) of the groove (16).

6. Moulding station according to claim 5, **characterised in that** the clamping roller (27) is connected with a lever (31).

7. Moulding station according to claim 5, **characterised in that** the clamping roller (27) is connected with a hydraulic, a pneumatic or an electrical drive.

8. Moulding station according to one of claims 5 to 7, **characterised in that** the clamping roller (27) has a groove (39) in which a pin (38) fastened to the spacer strip (12) engages and serves as a rotational abutment.

9. Moulding station according to one of claims 5 to 8, **characterised in that** the clamping roller (27) is operatively connected with the clamping device (33) for the clamping between spacer strips (12) and support plate (14) or table (5).

10. Moulding station according to claim 9, **characterised in that** the clamping roller (27) bears by the circumference thereof in open setting on a pin (34) seated in a sliding block (36) and actuated by way of springs (35), wherein the sliding block (36) is seated in a groove (37) in the support plate (14) or in the table (5), whilst in the clamped setting the milled-away part (28) is disposed opposite the pin (34).

11. Moulding station according to claim 6, **characterised in that** the lever (31) is so fastened to the clamping roller (27) that in unlocked setting of the locking unit it is disposed towards the top and serves as an insertion aid.

12. Moulding station according to one of claims 1 to 11, **characterised in that** a respective passage in the form of an elongate hole (17, 32) is provided in each of the spacer strips (12), wherein the elongate holes (17, 32) extend in the direction of the axis of symmetry (40, 41) of the spacer strips (12) adjustable relative to one another.

## Revendications

1. Poste de moulage d'un dispositif d'emboutissage profond d'une plaque chaude en matière thermoplastique par différence de pression, comprenant :
a) deux châssis de serrage (3, 4) pour serrer la plaque (8),
b) une table (5) réglable en hauteur pour recevoir un moule d'emboutissage profond (6),
c) des entretoises (12) entre la table (5) ou un plateau de support (14) monté sur la table (5) et la plaque de base (11) du moule d'emboutissage profond (6),
d) ces entretoises étant réalisées pour s'adapter à différentes tailles de moule d'emboutissage profond (6), de manière coulissante sur la table (5) ou sur le plateau de support (14) et
e) elles sont réalisées comme unité de verrouillage pour des éléments de verrouillage (15, 13) fixées à la plaque de base du moule (11).

2. Poste de moulage selon la revendication 1,
**caractérisé en ce que**
les éléments de verrouillage sont des goujons (15) ou des pattes (13) et comportent une rainure (16) dans laquelle vient en prise une pièce antagoniste (19, 27) par coulissement ou rotation.

3. Poste de moulage selon la revendication 1 ou 2,
**caractérisé en ce que**
la pièce antagoniste est en forme de tiroir (19) coulissant par un moyen manuel pneumatique hydraulique ou motorisé.

4. Poste de moulage selon la revendication 3,
**caractérisé en ce que**
le tiroir (19) comporte deux entretoises (21) avec des rampes (20).

5. Poste de moulage selon les revendications 1 ou 2,
**caractérisé en ce que**
la pièce antagoniste est réalisée sous la forme d'un rouleau de serrage (27) qui comporte un bec (29) réalisé par un dégagement fraisé (28), ce bec venant prise avec la surface (30) de la rainure (16).

6. Poste de moulage selon la revendication 5,
**caractérisé en ce que**
le rouleau de serrage (27) est relié à un levier (31).

7. Poste de moulage selon la revendication 5,
**caractérisé en ce que**
le rouleau de serrage (27) est relié à un moyen d'entraînement hydraulique pneumatique ou électrique.

8. Poste de moulage selon l'une des revendications 5 à 7,
**caractérisé en ce que**
le rouleau de serrage (27) comporte une rainure (39) dans laquelle pénètre une broche (38) fixée à l'entretoise (12) et constitue une butée de rotation.

9. Poste de moulage selon l'une des revendications 5 à 8,
**caractérisée en ce que**
le rouleau de serrage (27) est relié à l'installation de serrage (39) pour assurer le serrage entre l'entretoise (12) et le plateau de support (14) ou la table (5).

10. Poste de moulage selon la revendication 9,
**caractérisé en ce que**
le rouleau de serrage (27) s'appuie avec sa périphérie en position d'ouverture contre un goujon (34) qui se trouve dans un galet de rainures (36) et est actionné par des ressorts (35), le galet de rainures (36) étant logé dans une rainure (37) du plateau du support (14) ou dans la table (5), alors qu'en position de serrage le dégagement fraisé (28) est en regard du goujon (34).

11. Poste de moulage selon la revendication 6,
**caractérisé en ce que**
le levier (31) est fixé au rouleau de serrage (27) pour qu'en position déverrouillée de l'unité de verrouillage, il soit tourné vers le haut et serve de moyens permettant la mise en place.

12. Poste de moulage selon l'une des revendications 1 à 11,
**caractérisé en ce que**
les entretoises (12) ont chacune un passage sous la forme d'un trou oblong (17, 32) et ces trous oblongs (17, 32) sont dirigés dans la direction de l'axe de symétrie (40, 41) des entretoises (12) réglables l'une par rapport à l'autre.
